# EUROPEAN PATENT APPLICATION

(11) **EP 4 707 103 A1**
(43) Date of publication of application: **11.03.2026**
(21) Application number: 24198923.5
(22) Date of filing: 06.09.2024
(51) Int. Cl.: B60W 30/18, B60W 30/182

(54) **SYSTEM AND METHOD FOR CONTROLLING A POWERTRAIN SYSTEM OF A VEHICLE, POWERTRAIN SYSTEM, VEHICLE, COMPUTER PROGRAM PRODUCT AND COMPUTER-READABLE STORAGE MEDIUM**

(71) Applicant: VOLVO TRUCK CORPORATION, 405 08 Göteborg (SE)
(72) Inventor: RYBERG, Henrik, 417 49 GÖTEBORG (SE); SCHELLENBERGER, Markus, 417 23 GÖTEBORG (SE)
(74) Representative: Kransell & Wennborg KB

(57) **Abstract**

The present disclosure relates to a computer system (100) for controlling a powertrain system (11) of a vehicle (10), the powertrain system comprising an internal combustion engine (12) connectable to one or more drive wheels (21), the computer system comprising processing circuitry (102) configured to selectively operate the powertrain system in a number of operational modes comprising at least a freewheeling mode (ES-FM), in which an output shaft of the engine is non-rotating and the engine is disconnected from the one or more drive wheels, wherein the processing circuitry is further configured to identify, in the freewheeling mode, a braking situation for the vehicle; responsive to the identified braking situation, determine to switch from a first clutch actuating engine restarting mode to a second clutch actuating engine restarting mode; and restart the engine by controlling a clutch according to the second clutch actuating engine restarting mode.

## Description

### TECHNICAL FIELD

The disclosure relates generally to the field of controlling a powertrain system of a vehicle while the vehicle is moving, and, more specifically, to an automatically controlled powertrain system for vehicles. In particular aspects, the disclosure relates to a computer system, powertrain system, vehicle and methods for controlling an engine of a vehicle, while the vehicle is moving. The disclosure can be applied to any type of vehicle, including heavy-duty vehicles, such as trucks, buses, and construction equipment, among other vehicle types. Although the disclosure may be described with respect to a particular vehicle, the disclosure is not restricted to any particular vehicle.

### BACKGROUND

Conventional internal combustion engine vehicles operate continuously when the engine is running, even when idling at traffic lights, stuck in traffic, or during extended periods of inactivity. This constant engine operation results in unnecessary fuel consumption and increased emissions, contributing to environmental pollution and increased fuel costs for vehicle owners. To address these issues, various stop and start technologies have been developed, such as engine idle stop-start systems, which shut off the engine when the vehicle is stationary and automatically restart it when the driver releases the brake or engages the accelerator.

In recent years, there has been a growing demand for more sophisticated and intelligent engine stop-and-start systems for heavy-duty vehicles that can adapt to a wider range of driving conditions. The development of automatic and predictive engine stop-and-start systems addresses these challenges by incorporating predictive algorithms, real-time data sources, and advanced control strategies. Automatic and predictive engine stop-and-start systems aim to provide smoother, more efficient, and less intrusive engine stop-and-start experiences for drivers while increasing fuel savings and emissions reduction.

However, in connection with the use of such systems in a vehicle, such as a heavy-duty vehicle, there is still a need for further improving the operations of the powertrain system, while the vehicle is moving.

### SUMMARY

According to a first aspect of the disclosure, there is provided a computer system for controlling a powertrain system of a vehicle, the powertrain system comprising an internal combustion engine connectable to one or more drive wheels, the computer system comprising processing circuitry configured to selectively operate the powertrain system in a number of operational modes comprising at least a freewheeling mode (ES-FM), in which an output shaft of the engine is non-rotating and the engine is disconnected from the one or more drive wheels, wherein the processing circuitry is further configured to: identify, in the freewheeling mode, a braking situation for the vehicle; responsive to the identified braking situation, determine to switch from a first clutch actuating engine restarting mode to a second clutch actuating engine restarting mode; and restart the engine by controlling a clutch according to the second clutch actuating engine restarting mode.

The disclosure is at least partly based on an insight that during emergency braking situations, particularly on slippery roads, there may be a need for a rapid and reliable engine restart to maintain vehicle control and power steering effectiveness. Moreover, it has been observed that hitherto known engine restart systems are typically more focused on driver comfort.

The first aspect of the disclosure may seek to improve the reliability and speed of engine restart in vehicles, particularly heavy-duty vehicles, with powertrain systems configured to be operated in a freewheeling mode with the engine shutdown while the vehicle is in motion. Moreover, the disclosure aims at addressing some of the limitations of existing systems that may not sufficiently support power steering during emergency situations.

A technical effect may include enhancing vehicle safety and driver experience by facilitating more rapid engine restart during detected braking situations, such as emergency braking events, thereby helping to maintain vehicle control and improving the overall responsiveness of the vehicle in such situations. Moreover, by introducing two distinct control strategies for engine restart, the proposed computer system enhances flexibility and increases the chances that the engine restarts more promptly and reliably, thereby supporting vehicle safety.

More specifically, a rapid engagement of the clutch helps prevent situations where the drive wheels slow down faster than the engine can be restarted, which could otherwise lead to poor power steering, loss of vehicle control, and a negative driver experience. In this context, poor power steering, loss of vehicle control, and a negative driver experience occur because the engine is unable to restart using the clutch.

Typically, as described herein, the engine is restarted by controlling the clutch to a torque transfer position.

Optionally in some example, including in at least one preferred example, the first clutch actuating engine restarting mode is a comfort clutch engagement mode and the second clutch actuating engine restarting mode is a rapid clutch engagement mode.

Optionally in some example, including in at least one preferred example, the processing circuitry may be configured to identify the braking situation for the vehicle by determining that a brake pedal is positioned in an engaged state during the freewheeling mode, and/or by receiving a braking request from an autonomous braking system during the freewheeling mode. A technical benefit may include improving the reliability of identifying a braking situation during the freewheeling mode, which may ensure that the system accurately detects when the engine needs to be restarted.

Optionally in some example, including in at least one preferred example, the processing circuitry may be configured to determine that the braking situation amounts to a panic braking situation. A technical benefit may include enabling the system to distinguish between an ordinary braking situation and a panic braking situation, allowing for faster and more appropriate responses. Such a distinction may help ensure that the engine restart is initiated promptly in panic situations, thereby maintaining vehicle stability and safety during moments such as emergency braking on slippery surfaces.

Optionally in some example, including in at least one preferred example, the processing circuitry may be configured to determine that the braking situation amounts to a panic braking situation by determining changes in the position of the brake pedal, and/or wherein the processing circuitry may be configured to determine that the braking situation amounts to a panic braking situation from data in the braking request. For each alternative, a technical benefit may include enhancing the ability to recognize panic braking situations, ensuring that the second clutch actuating engine restarting mode is used to secure a successful engine restart. Monitoring both the movement of the brake pedal and the braking requests from autonomous systems may further increase the accuracy of panic braking detection.

Optionally in some example, including in at least one preferred example, the processing circuitry may be configured to determine that a panic braking situation is different from an ordinary braking situation by determining the speed of a brake pedal positional change. A technical benefit may include improving the sensitivity and specificity of panic braking detection by evaluating the speed of brake pedal movement. Such evaluation may allow for a more accurate differentiation between normal and panic braking.

Optionally in some example, including in at least one preferred example, the second clutch actuating engine restarting mode may comprise engaging the clutch so that torque from the drive wheels to the engine is transferred quicker therebetween than in the first clutch actuating engine restarting mode. A technical benefit may include reducing the time required to transfer torque from the drive wheels to the engine during the engine restart in the freewheeling mode.

Optionally in some example, including in at least one preferred example, the second clutch actuating engine restarting mode may comprise engaging the clutch so that torque from the drive wheels to the engine is transferred quicker therebetween than in the first clutch actuating engine restarting mode through a quicker response time in the second clutch actuating engine restarting mode than in the first clutch actuating engine restarting mode. A quicker response time may also improve overall vehicle control during emergency braking scenarios as it will improve the chances of restarting the engine.

Optionally in some example, including in at least one preferred example, a clutch engagement time for the second clutch actuating engine restarting mode may be shorter than a clutch engagement time for the first clutch actuating engine restarting mode. A technical benefit may include reducing the delay in clutch engagement during engine restart, which may contribute to faster reengagement of the engine with the drivetrain. Faster clutch engagement may support more immediate vehicle control recovery during panic braking situations, thereby enhancing vehicle safety.

Optionally in some example, including in at least one preferred example, the torque transfer time from the drive wheels to the engine in the second clutch actuating engine restarting mode may at least be 25 % faster than the torque transfer time from the drive wheels to the engine in the first clutch actuating engine restarting mode. A technical benefit may include even further reducing the torque transfer time during engine restart.

Optionally in some examples, including in at least one preferred example, the processing circuitry may be further configured to predict a potential operational mode for the powertrain system after the freewheeling mode so as to determine whether the engine is to be used for propulsion or for an engine braking operation. A technical benefit may include the possibility of evaluating the subsequent use of the powertrain system after the freewheeling mode when controlling the powertrain system, thus further enhancing vehicle safety and operational efficiency by effectively managing the transition between different operational modes.

Optionally in some examples, including in at least one preferred example, the processing circuitry may be configured to control the powertrain system into the freewheeling mode by changing a rotating state of the output shaft to a non-rotating state, and disconnecting the engine from the one or more drive wheels. A technical benefit may include providing improved fuel efficiency and decreased wear on engine components over time.

Optionally in some examples, including in at least one preferred example, the processing circuitry may further be configured to initiate activation of the freewheeling mode based on topography data and vehicle data. A technical benefit may include providing a more precise activation of the freewheeling mode so as to further enhance fuel savings, while minimizing, or at least reducing the risk of disruptions to the driving experience.

Optionally in some examples, including in at least one preferred example, the processing circuitry may further be configured to determine a starting point in time for the freewheeling mode based on topography data and vehicle data. A technical benefit may include further assisting in achieving enhanced fuel efficiency by ensuring that the vehicle takes increased advantage of gravitational forces and inertia during downhill sections of a route.

Optionally in some examples, including in at least one preferred example, restart the engine by controlling the clutch according to the second clutch actuating engine restarting mode may be performed by engaging the clutch to a torque transfer position. In the torque transfer position, the torque is transferred between the engine and the drive wheels, e.g. from the front drive wheels to the engine to crank the engine.

According to a second aspect of the disclosure, there is provided a powertrain system comprising a computer system according to any one of the preceding examples, an internal combustion engine, a controllable clutch, and a transmission arranged to be coupled to the internal combustion engine by means of the controllable clutch, wherein the transmission further comprises an output shaft configured to be coupled to a driven axle of a set of wheels.

The disclosure according to the second aspect may seek to improve the reliability and speed of engine restart in vehicles, particularly heavy-duty vehicles, with powertrain systems configured to be operated in a freewheeling mode with the engine shutdown while the vehicle is in motion. Moreover, the disclosure aims at addressing some of the limitations of existing systems that may not sufficiently support power steering during emergency situations.

A technical effect may include enhancing vehicle safety and driver experience by facilitating more rapid engine restart during detected braking situations, such as emergency braking events, thereby helping to maintain vehicle control and improving the overall responsiveness of the vehicle in such situations. Moreover, by introducing two distinct control strategies for engine restart, the proposed computer system increases the chances that the engine restarts more promptly and reliably, thereby supporting vehicle safety.

Another technical benefit may include providing an integrated powertrain system that leverages the control strategies described above.

Optionally in some example, including in at least one preferred example, the controllable clutch may be an electronically controlled multi-plate clutch. A technical benefit may include enhancing the precision and reliability of clutch engagement through the use of an electronically controlled multi-plate clutch. Such a clutch may allow for more controlled and responsive engagement, which may further provide for a quick torque transfer during engine restart, further contributing to the system's ability to maintain vehicle control during emergency braking. Optionally in some example, including in at least one preferred example, the transmission may be an automatic transmission configured to automatically select gear ratios based on vehicle speed and load. A technical benefit may include ensuring reliable gear selection during and after engine restart, which may support smooth and efficient power delivery to the wheels. The automatic transmission's ability to adapt to changing conditions may help maintain vehicle stability and control during engine restart events.

According to a third aspect of the disclosure, there is provided a vehicle comprising the computer system of the first aspect and/or a powertrain system according to the second aspect. By way of example, the vehicle is a heavy-duty vehicle. The disclosure according to the third aspect may seek to improve the reliability and speed of engine restart in vehicles, particularly heavy-duty vehicles, with powertrain systems configured to be operated in a freewheeling mode with the engine shutdown while the vehicle is in motion. Moreover, the disclosure aims at addressing some of the limitations of existing systems that may not sufficiently support power steering during emergency situations. A technical effect may include enhancing vehicle safety and driver experience by facilitating more rapid engine restart during detected braking situations, such as emergency braking events, thereby helping to maintain vehicle control and improving the overall responsiveness of the vehicle in such situations. Moreover, by introducing two distinct control strategies for engine restart, the proposed computer system increases the chances that the engine restarts more promptly and reliably, thereby supporting vehicle safety.

Optionally in some examples, including in at least one preferred example, the vehicle may be an internal combustion engine vehicle (ICEV). An ICEV is a vehicle that relies solely on an internal combustion engine for propulsion, without the assistance of electric motors or fuel cells that are characteristic of hybrid or fully electric vehicles. Optionally in some examples, including in at least one preferred example, the vehicle is a non-electric vehicle. In this context, the term non-electric vehicle refers to a vehicle avoid of any electric storage and power system configured to provide traction power to the vehicle. Such electric storage system may be battery system in combination with an electric machine and/or fuel cell system in combination with an electric machine. In other words, a non-electric vehicle is a vehicle comprising the internal combustion engine as the primary, or the sole, power source for the powertrain system. The use of the computer system for controlling a non-electric vehicle, while the vehicle is moving, may be particularly useful where the internal combustion engine is the only available power source for the vehicle.

According to a fourth aspect of the disclosure, there is provided a computer-implemented method for controlling a powertrain system of a vehicle, wherein the powertrain system comprises an internal combustion engine connectable to one or more drive wheels, the powertrain system being operable in a number of operational modes, including at least a freewheeling mode in which an output shaft of the engine is non-rotating and the engine is disconnected from the one or more drive wheels, the method comprises identifying, in the freewheeling mode and by processing circuitry of a computer system, a braking situation for the vehicle; responsive to the identified braking situation, determining, by processing circuitry of a computer system, to switch from a first clutch actuating engine restarting mode to a second clutch actuating engine restarting mode; and restarting, by processing circuitry of the computer system, the engine by controlling a clutch according to the second clutch actuating engine restarting mode.

The disclosure according to the fourth aspect may seek to improve the reliability and speed of engine restart in vehicles, particularly heavy-duty vehicles, with powertrain systems configured to be operated in a freewheeling mode with the engine shutdown while the vehicle is in motion. Moreover, the disclosure aims at addressing some of the limitations of existing systems that may not sufficiently support power steering during emergency situations. A technical effect may include enhancing vehicle safety and driver experience by facilitating more rapid engine restart during detected braking situations, such as emergency braking events, thereby helping to maintain vehicle control and improving the overall responsiveness of the vehicle in such situations. Moreover, by introducing two distinct control strategies for engine restart, the proposed computer system increases the chances that the engine restarts more promptly and reliably, thereby supporting vehicle safety.

Another technical benefit may include providing a systematic and efficient method for managing engine restart during braking situations, which may ensure that the engine and drivetrain are re-engaged quickly and reliably. Such a method may enhance the vehicle's ability to maintain control and safety during critical driving events.

According to a fifth aspect of the disclosure, there is provided a computer program product comprising program code for performing, when executed by the processing circuitry of the first aspect, the method of the fourth aspect.

According to a sixth aspect of the disclosure, there is provided a non-transitory computer-readable storage medium comprising instructions, which when executed by the processing circuitry of the first aspect, cause the processing circuitry to perform the method of the fourth aspect.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** illustrates an exemplary view of a vehicle comprising a powertrain system and a computer system having a processing circuitry configured to control the powertrain system according to an example.
**FIG. 2** illustrates an example of controlling a powertrain system of a vehicle according to an example.
**FIG. 3** is a flow chart of an exemplary method for controlling a powertrain system of a vehicle according to an example.
**FIG. 4** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

In the field of vehicles, there is an increasing demand for improving the fuel efficiency and reducing emissions of the internal combustion engine (ICE). One operation for enhancing fuel efficiency and lowering emissions in a powertrain system is referred to as freewheeling. Freewheeling is commonly applied in heavy-duty vehicles. The purpose of freewheeling in heavy-duty vehicles is to save fuel and reduce engine load under certain driving conditions. Freewheeling is commonly used when the vehicle is descending downhill or traveling on a slope. There are typically two types of freewheeling modes. In one type of freewheeling operation, the engine is disconnected or disengaged from the driving wheel(s), allowing the vehicle to coast freely (in contrast to a conventional coasting mode). Hereby, the heavy-duty vehicle can take advantage of gravitational forces to maintain or increase speed while consuming minimal fuel. This type of freewheeling operation can be particularly useful for improving fuel efficiency and reducing wear and tear on the braking system during downhill descents. Freewheeling can be engaged manually by the driver or automatically by the vehicle's control system, e.g. as a part of the automatic and predictive engine stop-and-start system. When the driver and/or an automatic vehicle control system initiates freewheeling, the transmission is typically shifted to a neutral or coasting position, decoupling the engine from the drivetrain. In some cases, the engine may idle at a minimal RPM to maintain essential functions like power steering and braking. This mode of operation may be denoted as a freewheeling mode with the engine disconnected.

Freewheeling may also include a specific mode of operation where the engine is typically shut down (in addition to being disconnected from the driving wheels). More specifically, in the context of the present disclosure, this freewheeling mode refers to an operational mode in which the output shaft of the engine is non-rotating, and the engine is disconnected from the one or more drive wheels, while the vehicle is in motion. An operational mode where the output shaft of the engine is non-rotating typically signifies that the engine is in a non-active state, such as in a shutdown state, engine off state, standby mode. By way of example, in such freewheeling mode, the engine is thus shutdown, and not engaged with the drivetrain for propulsion. In addition, no fuel is supplied to the engine. For ease of reference, this freewheeling mode is denoted as the engine stop freewheeling mode (ES-FM). The engine stop freewheeling mode refers to a freewheeling mode with the engine shutdown, and disconnected from the drive wheel(s), while the vehicle is in motion.

Operating the powertrain system in the engine stop freewheeling mode ES-FM contributes to even better fuel consumption and reduced emissions. Additionally, the engine stop freewheeling mode ES-FM allows for quicker attainment of the target speed, as compared to other operational modes, such as the coasting mode, wherein the engine remains connected to the driving wheels. The engine stop freewheeling mode ES-FM thus facilitates more efficient acceleration and speed management, particularly in situations such as downhill driving. As such, prolonging the operation of the powertrain system in the engine stop freewheeling mode ES-FM enables the maintenance of a higher average speed.

However, during operation of the powertrain system and the vehicle in the engine stop freewheeling mode ES-FM, it may occasionally be needed to more rapidly restart the engine for various reasons, such as during emergency braking situations, particularly on slippery roads. For example, there may be a need for a rapid and reliable engine restart to maintain vehicle control and power steering effectiveness. Moreover, it has been observed that hitherto known engine restart systems are typically more focused on driver comfort.

The disclosure seeks to improve the reliability and speed of engine restart in vehicles, particularly heavy-duty vehicles, with powertrain systems configured to be operated in a freewheeling mode with the engine shutdown while the vehicle is in motion. Moreover, the disclosure aims at addressing some of the limitations of existing systems that may not sufficiently support power steering during emergency situations. A technical effect may include enhancing vehicle safety and driver experience by facilitating more rapid engine restart during detected braking situations, such as emergency braking events, thereby helping to maintain vehicle control and improving the overall responsiveness of the vehicle in such situations. Moreover, by introducing two distinct control strategies for engine restart, the proposed computer system increases the chances that the engine restarts more promptly and reliably, thereby supporting vehicle safety.

One example of a vehicle comprising a powertrains system and a computer system will now be described in relation to a vehicle in the form of a heavy-duty vehicle, such as a truck.

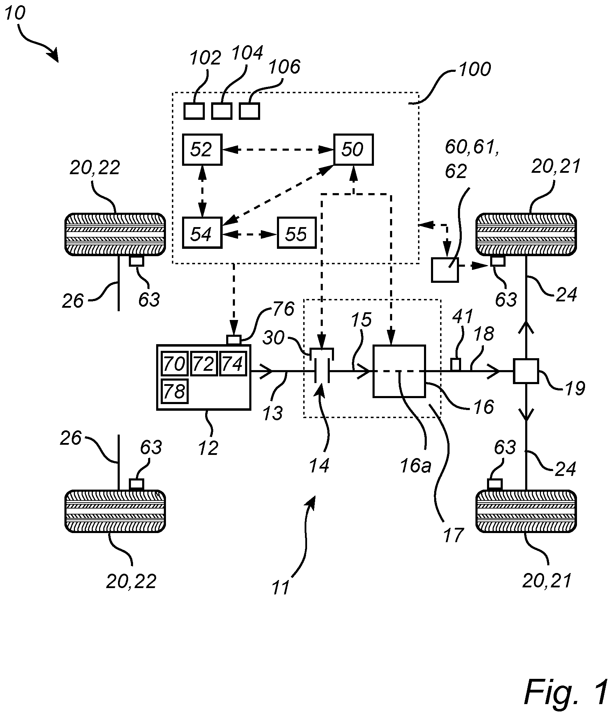

FIG. 1 schematically illustrates an exemplary vehicle 10. The vehicle 10 in FIG. 1 comprises a powertrain system 11. The powertrain system 11 is adapted to power the vehicle 10. The vehicle 10 comprises a plurality of wheels 20, typically comprising a set of drive wheels 21 and a set of non-driven wheels 22. The drive wheels 21 are powered by the powertrain system 11.

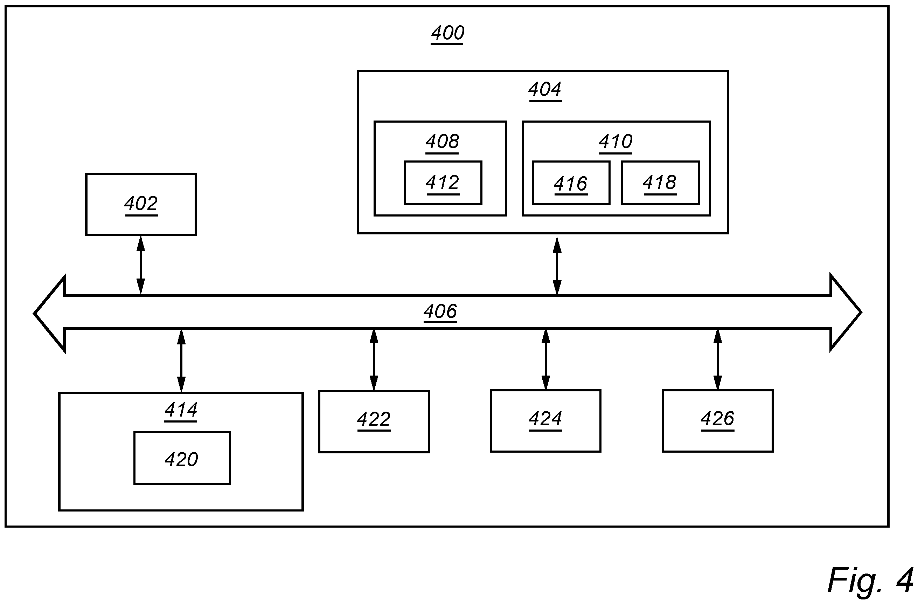

In addition, as depicted in FIG. 1, the vehicle 10 comprises a computer system 100. In this example, the powertrain system 11 comprises the computer system 100. In other examples, the computer system 100 is a separate part of the vehicle, which is configured to be in communication with the powertrain system 11. The computer system 100 may also be a remote server configured to be in communication with the powertrain system 11. The computer system 100 is configured to control the powertrain system 11. The computer system 100 here comprises a processing circuitry 102. The operations of the processing circuitry 102 will be further described herein. In FIG. 1, the computer system 100 also comprises a memory 104 and a system bus 106. These components and further optional technical details of the computer system 100 are described in relation to FIG. 4.

The computer system 100 is configured to selectively operate the powertrain system 11 in a number of operational modes, comprising at least the engine stop freewheeling mode ES-FM. In the engine stop freewheeling mode ES-FM, the output shaft of the engine is non-rotating, and the engine is disconnected from the one or more drive wheels. For ease of reference, the engine stop freewheeling mode ES-FM will in the following be denoted as the freewheeling mode ES-FM.

Optionally, the computer system 100 is configured to selectively operate the powertrain system 11 in a number of operational modes, comprising the engine stop freewheeling mode ES-FM, an additional freewheeling mode, denoted as an engine disconnected freewheeling mode (ED-FM), in which an output shaft of the engine is rotating, the engine is disconnected from the one or more drive wheels, and fuel is being supplied to the engine; in a coasting mode CM, in which the output shaft of the engine is rotating, the engine is connected to the one or more drive wheels, and fuel supply to the engine is interrupted; and in an engine braking mode EBM, in which the output shaft of the engine is rotating, the engine is connected to the one or more drive wheels, and the engine is operated so as to generate a braking effect.

In addition, the computer system 100 is configured to control an engine restart attempt of the vehicle 10, while the vehicle 10 is moving. The computer system 100 is thus configured to restart the engine 12 of the vehicle 10, while the vehicle 10 is moving.

Turning again to FIG. 1, the powertrain system 11 comprises an internal combustion engine 12. For ease of reference, the internal combustion engine is herein typically denoted as the engine, or sometimes as the ICE. The engine 12 comprises at least one cylinder 74 having a combustion chamber 70 and a reciprocating piston 72. More specifically, the engine 12 comprises a plurality of cylinders 74, each one having a corresponding combustion chamber 70 and a corresponding piston 72 arranged therein.

The powertrain system 11 also comprises a fuel injector 78, as illustrated in FIG. 1. The fuel injector 78 is here an integral part of the engine 12. The fuel injector 78 is configured to inject fuel into the engine 12. The fuel injector 78 may be any suitable type of injector capable of injecting fuel such as a diesel fuel, a gaseous fuel and the like. Typically, the fuel injector 78 is arranged in the cylinder 74, and axially above the piston 72. Each one of the cylinders 74 of the engine 12 comprises a corresponding fuel injector 78. The fuel injector 78 is controllable by the computer system 100. By way of example, the fuel injector 78 is controllable by the processing circuitry 102 of the computer system 100.

The fuel injector 78 is controllable by the processing circuitry 102 of the computer system 100 in order to allow the computer system 100 to switch between the various modes of the powertrain system 11, such as the engine stop freewheeling mode ES-FM, as described herein.

The engine 12 is configured to output a rotational speed via an engine output shaft 13, also referred to as the output shaft of the engine 12, as illustrated in e.g. FIG. 1. Hence, the powertrain system 11 comprises the engine output shaft 13. The engine output shaft 13 can either be in a rotating state or in a non-rotating state. When the engine output shaft 13 rotates, the engine 12 is typically turned on, while when the engine output shaft 13 is non-rotating, the engine 12 is typically shutdown.

The engine 12 is typically also configured to operate in a conventional four stroke fashion, i.e. operated by an intake stroke, a compression stroke, a combustion stroke, and an exhaust stroke. In this example, the engine is an internal diesel combustion engine, i.e. an engine designed to work according to the diesel process. By way of example, the engine 12 is a compression ignition internal combustion engine. The engine 12 may also be provided in other types of configurations or be operated by other types of fuels. The components of an engine are well-known, and thus not further described herein.

The powertrain system 11 here also comprises a starter motor 76. The starter motor 76 is here an integral part of the engine 12. Alternatively, the starter motor 76 is operatively connected to the engine 12 to allow the starter motor 76 to crank the engine 12, as is commonly known in the art. As such, the starter motor 76 is configured to crank the engine 12. Engine cranking is performed by controlling the starter motor 76 to engage a flywheel so as to initiate combustion.

Moreover, the powertrain system 11 comprises a transmission arrangement 17. The transmission arrangement 17 comprises a gearbox 16 and a controllable clutch 14.

The gearbox 16 has a number of gear stages to obtain a set of gears. Each one of the gears has a corresponding gear ratio. The transmission arrangement 17 may sometimes be denoted simply as the transmission.

The transmission arrangement 17 is operatively connected to the engine 12 via a transmission input shaft 15. Therefore, the transmission arrangement 17 comprises the transmission input shaft 15. The transmission input shaft 15 rotates with a certain rotational speed while the vehicle 10 is moving. Hence, the transmission input shaft 15 has a corresponding rotational speed. The transmission input shaft 15 is one example of a powertrain shaft. The transmission arrangement 17 also has a transmission output shaft 18 for providing a rotational speed to one or more drive wheels 21 of the vehicle 10, as schematically illustrated in FIG. 1. Briefly stated, the engine output shaft 13 transmits rotational speed from the engine 12 to the transmission arrangement 17 which further transmits the motion via the transmission output shaft 18 to the drive wheels 21, which in FIG. 1 is a pair of rear wheels.

The transmission output shaft 18 rotates with a certain rotational speed while the vehicle is moving. Hence, the transmission output shaft 18 has a corresponding rotational speed. The transmission output shaft 18 is another example of a powertrain shaft.

As illustrated in FIG. 1, the vehicle 10 here comprises a pair of front wheels and the pair of rear wheel. Moreover, the rear wheels are here drive wheels 21, while the front wheels are non-driven wheels 22. The drive wheels 21 are operatively connected to corresponding rotational drive axles 24. The non-driven wheels 22 are operatively connected to corresponding rotational non-driven axles 26. Typically, the vehicle 10 comprises one or more drive wheels and one or more non-driven wheels. The drive wheels 21 are driven by the powertrain system 11.

As such, the pair of front wheels are here operatively connected to the respective non-driven axles / shafts 26. In a similar vein, the pair of rear wheels are here operatively connected to the respective driven axles / shafts 24.

The transmission arrangement 17 is one of a semi-automatic transmission arrangement and an automatic transmission arrangement. Automatic transmission arrangements are common in heavy-duty vehicles to control engagement and disengagement of e.g. an automated disk-clutch between the engine and the transmission arrangement. An automatic transmission arrangement is typically made up of the input shaft 15, the intermediate shaft 16a, which has at least one gearwheel in engagement with a gearwheel on the input shaft 15, and an internal main shaft (not shown) with gearwheels which engage with gearwheels on the intermediate shaft 16a. The internal main shaft is also connected to the transmission output shaft 18 coupled to the driving wheels 21 via, for example, the drive shaft(s) 24.

The drive shaft 24 rotates with a certain rotational speed while the vehicle 10 is moving. Hence, the drive shaft 24 has a corresponding rotational speed. The drive shaft 24 is another example of a powertrain shaft.

In one example, when the transmission arrangement 17 comprises the intermediate shaft 16a arranged in the transmission arrangement 17, the transmission intermediate shaft 16a rotates with a certain rotational speed while the vehicle is moving. Hence, the transmission intermediate shaft 16a has a corresponding rotational speed. The transmission intermediate shaft 16a is another example of a powertrain shaft.

The transmission arrangement 17 is in this example an automated manual transmission (AMT), configured to transmit torque to the drive wheels 21. Typically, the transmission arrangement 17 is configured to transmit torque to the drive wheels 21 via the transmission output shaft 18 via one or more driven wheel shafts 24 or the like. In other words, the vehicle 10 is typically provided with an engine 12 operatively connected to the transmission arrangement 17, such as an automated manual transmission (AMT), for transmitting torque to the drive wheels 21.

As mentioned above, and as also illustrated in FIG. 1, the powertrain system 11 also comprises the clutch 14. The clutch 14 is here a controllable clutch. The controllable clutch 14 is e.g. controllable by the processing circuitry 102 of the computer system 100. Hence, the term controllable clutch refers to a clutch that is configured to be controllable by a processing circuitry, such as the processing circuitry 102. For ease of reference, the controllable clutch may simply be referred to as the clutch 14. The clutch 14 can be arranged in several manners in the powertrain system 11. In FIG. 1, the controllable clutch 14 is arranged in-between the engine 12 and the transmission arrangement 17. The controllable clutch 14 is configured to operatively connect the transmission arrangement 17 with the engine 12. In particular, the controllable clutch 14 is configured to operatively connect the engine output shaft 13 of the engine 12 to the transmission input shaft 15 of the transmission arrangement 17. As such, the engine output shaft 13 of the engine 12 can be operatively connected to the transmission input shaft 15 of the transmission arrangement 17 via the controllable clutch 14 when a gear is engaged. As is commonly known in the art, the transmission arrangement 17 and the clutch 14 are hereby operable to select a gear ratio between the engine 12 and a pair of the drive wheels 21. While FIG. 1 schematically illustrates an example where the transmission arrangement 17 includes the controllable clutch 14, the controllable clutch 14 can also be a stand-alone device of the powertrain system 11.

The controllable clutch 14 is a mechanical component configured to transfers power from the engine 12 into the transmission arrangement 17. Moreover, the controllable clutch 14 is configured to disconnect the engine 12 from the gearbox 16 and the rest of the transmission arrangement 17, when required. The controllable clutch 14 is here configured for transmitting the rotational torque from the engine 12 to the drive wheels 21. By way of example, the controllable clutch 14 is one of a single clutch unit, a dual-clutch unit, or any other type of multi-clutch unit. In one example, the clutch 14 is an electronically controlled multi-plate clutch.

The controllable clutch 14 is controlled by the computer system 100. In particular, the controllable clutch 14 is controlled by the processing circuitry 102 of the computer system 100. By way of example, the controllable clutch 14 is controlled by the processing circuitry 102 of the computer system 100 via a clutch actuator 30, as illustrated in FIG. 1.

The controllable clutch 14 allows the computer system 100 to engage or disengage the engine's power from the drive wheels 21. The controllable clutch 14 is thus configured to engage the engine 12 to the gearbox 16 as well as to disengage the engine 12 from the gearbox 16. The controllable clutch 14 can also be used to allow smooth standing starts through clutch control, which partially engages allowing the clutch to slip. In this example, the controllable clutch 14 is also controlled to restart the engine 12 while the vehicle 10 is moving. As such, the controllable clutch 14 is used for restarting the engine 12.

By means of the clutch 14, the engine 12 can be connected to the one or more drive wheels, such as the wheels 21. Also, by means of the clutch 14, the engine 12 can be disconnected from the one or more drive wheels, such as the wheels 21. The engine 12 may also be disconnected from the one or more drive wheels by setting the transmission to neutral, meaning that no gear is engaged.

Optionally, the vehicle 10 also includes a differential function 19 arranged in-between the pair of drive wheels 21 and the transmission arrangement 17. The differential function 19 mechanically (operatively) connects the output shaft 18 of the transmission arrangement 17 with the driven axles 24. By means of the differential function 19, the engine 12 can be connected to the one or more drive wheels, such as the wheels 21. The differential function 19 is a well-known standard component and thus not further described herein.

The vehicle 10 here also comprises a braking system 60, as illustrated in FIG. 1. The braking system 60 is in communication with the processing circuitry 102. In one example, the braking system 60 is an integral part of the computer system 100. In other examples, the braking system 60 is a separate system arranged and configured to be in communication with the processing circuitry 102 of the computer system 100. For example, the braking system 60 comprises an automatic braking system 61. In addition, or alternatively, the braking system 60 comprises a braking pedal 62. The braking pedal 62 is manipulated by the driver of the vehicle 10. The braking system 60 here also includes one or more service brake units 63. The service brake unit 63 may be a wet brake type or a dry brake type. The service brake unit 63 is typically configured for performing a brake function. As an example, the service brake unit is a wheel brake. In addition, a service brake unit may be provided for each wheel, as illustrated in FIG. 1. The service brake unit(s) 63 are here an integral part of the braking system 60. In other examples, the service brake unit(s) 63 are separate parts of the vehicle 10 and configured to be in communication with the braking system 60. The braking system 60 here also comprises an electronic brake control system 52.

Turning again to the transmission arrangement 17. The transmission arrangement 17 may be configured to be controlled by the driver and/or automatically via an electronic control unit (ECU). One example of an ECU is a transmission control unit. In FIG. 1, the powertrain system 11 comprises the transmission control unit (TCU) 50. The transmission control unit may also be denoted as a transmission electronic control unit (TECU). By way of example, the TCU 50 is an integral part of the computer system 100. The TCU 50 is configured to control the transmission arrangement 17. Hence, the TCU 50 is configured to control the controllable clutch 14 and the gearbox 16.

The computer system 100 may also comprise an automatically controlled engine start system 54. The automatically controlled engine start system 54 is configured to automatically control the operation of shutting down the engine 12 and restarting the engine 12 while the vehicle 10 is moving. The automatically controlled engine start system 54 is here an integral part of an automatic and predictive engine stop-and-start system. Such system is configured to predict suitable situations where the engine can be shut down and restarted, while the vehicle 10 is moving, and also configured to control the shutdown and restart of the engine 12, while the vehicle 10 is moving. The automatically controlled engine start system 54 may include a predictive cruise control system, or at least be configured to communicate with a predictive cruise control system of the vehicle 10. Hence, the computer system 100 may also comprise a predictive cruise control system. The predictive cruise control system is here an automatic predictive cruise control system 55, as illustrated in Fig. 1. A predictive automatic cruise control system is for example configured to control a speed of the vehicle based on a vehicle target speed in automatic manner. The automatic predictive cruise control system 55 is also configured to control the speed of the vehicle in an automatic manner. Thus, the predictive automatic cruise control system 55 is configured to control the vehicle according to a vehicle target speed in an automatic manner. The computers system 100 here comprises the automatic predictive cruise control system 55.

The predictive cruise control system 55 is configured to control the powertrain system 11 based on predicted changes in relation to the route ahead of the vehicle 10. A predictive cruise control system 55 may generally be configured to control the vehicle 10 based on topography and route data. The predictive cruise control system 55 may comprise, or communicate with, any one of a radar or lidar sensors used to detect vehicles and obstacles ahead, camera system to provide visual data about the road and traffic conditions, and GPS (Global Positioning System) to determine the vehicle position. The predictive cruise control system may further be configured to provide, or acquire, information about the road ahead, including changes in terrain, curves, and upcoming traffic conditions, speed and distance settings, brake control data, throttle control to maintain desired speed or accelerate, etc.

The predictive cruise control system 55 typically incorporates the basic functionalities of an automatic cruise control but adds predictive elements. For example, the predictive cruise control system 55 uses GPS and digital maps to anticipate road conditions ahead, such as curves, hills, and changes in the speed limit. Hereby, the predictive cruise control system 55 is configured to adjust the vehicle's speed proactively by considering the upcoming road conditions.

The engine 12 can occasionally also be started by the starter motor 76 in specific situations when the engine restart using the clutch is not possible. Typically, in such cases, the processing circuitry 102 is configured to perform the restart engine by the starter motor 76. By way of example, the processing circuitry 102 is configured to control the starter motor 76 to engage the flywheel of the powertrain system 11 so as to initiate combustion, as is commonly referred to as an engine cranking operation.

The engine 12 is typically started by controlling the controllable clutch 14 to a torque transfer position (while the vehicle is in motion). In the torque transfer position, the controllable clutch 14 is set in a state in which torque is transferable between the engine 12 and the wheels 20, more specifically the drive wheels 21 (here also corresponding to the rear wheels). By controlling the controllable clutch 14 to the torque transfer position, the controllable clutch 14 is allowed to change a torque transfer between the engine 12 and the wheels 21. In this manner, the computer system 100 is configured to perform the engine restart, as described herein. The controllable clutch 14 can be controlled in several different manners. By way of example, the controllable clutch 14 is controlled to gradually change the torque transfer between the engine 12 and the wheels 21. Alternatively, or in addition, the controllable clutch 14 can be controlled to change the torque transfer between the engine 12 and the wheels 21 in a step-wise manner. Hence, the clutch 14 can either be set in a partly engaged state or in a fully engaged state start the engine.

As depicted in FIG. 1, the TCU 50 is also configured to be in communication with the automatically controlled engine start system 54. As such, the TCU 50 can control the controllable clutch 14 in response to data from the automatically controlled engine start system 54. In addition, the TCU 50 is here configured to be in communication with an electronic brake control system (EBS) 52. The electronic brake control system 52 is here an integral part of the braking system 60 that is incorporated in the computer system 100. In other examples, the electronic brake control system 52 is a separate part of the vehicle that is in communication with the computer system 100 and the TCU 50. The electronic brake control system 52 is here also an automatic electric brake control system forming part of the autonomous braking system 61. The processing circuitry 102 can either be an integral part of the TCU, or a separate part configured to be in communication with the TCU 50.

In other examples, the TCU 50 comprises the automatically controlled engine start system 54. In addition, or alternatively, the TCU 50 comprises the predictive cruise control system 55.

The TCU 50 is here also configured to be in communication with an electronic control unit of the engine 12. Such electronic control unit may be denoted as an engine electronic control unit (EECU) or an engine management system (EMS). Both the TCU 50 and the EECU (and/or EMS) are typically integral parts of the computer system 100.

Moreover, the computer system 100 is here configured to control the clutch 14 in a first clutch actuating engine restarting mode, CM1, and a second clutch actuating engine restarting mode, CM2, which are further described hereinafter.

In the following, an exemplary set of operations for controlling the powertrain system 11 of the heavy-duty vehicle 10 will be further described. The powertrains system 11 is controlled by the computer system 100. The computer system 100 is intended to control the powertrain system 11 of the vehicle 10, while the vehicle 10 is moving, i.e. in a non-stationary state. Accordingly, the computer system 100 is configured to control the engine 12 of the vehicle 10 to the engine stop freewheeling mode ES-FM, while the vehicle 10 is moving.

The following operations may generally be performed by the processing circuitry 102 of the computer system 100 so as to control the powertrain system 11, while the vehicle 10 is moving.

The processing circuitry 102 is configured to selectively operate the powertrain system 11 in the engine stop freewheeling mode ES-FM, in which the output shaft 13 of the engine 12 is non-rotating, and the engine 12 is disconnected from the one or more drive wheels 21. The processing circuitry 102 is configured to select the engine stop freewheeling mode ES-FM and control the powertrain system 11 into the engine stop freewheeling mode ES-FM responsive to various prediction operations, as described herein.

Moreover, in the freewheeling mode ES-FM, the processing circuitry 102 is configured to identify a braking situation for the vehicle 10.

Responsive to the identified braking situation for the vehicle 10, the processing circuitry 102 is configured to determine to switch from the first clutch actuating engine restarting mode CM1 to the second clutch actuating engine restarting mode CM2.

Subsequently, the processing circuitry 102 is configured to restart the engine 12 by controlling the clutch 14 according to the second clutch actuating engine restarting mode CM2.

By way of example, the processing circuitry 102 is configured to identify the braking situation for the vehicle 10 by determining that the brake pedal 62 is positioned in an engaged state during the freewheeling mode ES-FM. In another example, the processing circuitry 102 is configured to identify the braking situation for the vehicle 10 by receiving a braking request from the autonomous braking system 61 during the freewheeling mode ES-FM.

In another example, the processing circuitry 102 is configured to identify the braking situation for the vehicle by either determining that the brake pedal 62 is positioned in an engaged state during the freewheeling mode ES-FM, or by receiving a braking request from the autonomous braking system 61 during the freewheeling mode ES-FM, whichever occur first in the freewheeling mode ES-FM.

The processing circuitry 102 is configured to detect any level of brake pedal engagement, from partial to full. Hence, the term "engage" in the context of the brake pedal encompasses a range of states that indicate the brake pedal is being pressed or activated by the driver. This includes, but is not limited to, partial engagement, moderate engagement and full engagement of the brake pedal. Partial engagement refers to a situation where the brake pedal is depressed to a certain extent, but not fully. Moderate engagement refers to a deeper depression of the brake pedal, where the braking force is increased but not at its maximum. Full engagement refers to the brake pedal being fully depressed, resulting in the maximum braking force available to the vehicle. The term "engage" in the context of the brake pedal may also encompass variable or gradual engagement, which refers to the continuous and dynamic adjustment of the brake pedal position by the driver. The engagement level may vary from partial to full as the driver modulates braking force depending on the driving conditions.

The autonomous braking system 61 is typically an integral part of the powertrain system 11 and in communication with the computer system 100. The autonomous braking system 61 may likewise be an integral part of the computer system 100, or at least a partly integral part of the computer system. An autonomous braking system (ABS), also referred to as an automatic emergency braking (AEB) system, is a safety technology designed to prevent or mitigate collisions by automatically applying the brakes when a potential collision is detected. The system typically uses sensors, such as radar, lidar, cameras, or a combination thereof, to monitor the environment around the vehicle and assess the risk of a collision. The autonomous braking system 61 may comprise a control unit that processes data from the sensors to determine if a collision is imminent. The control unit uses algorithms to evaluate the distance to the object, the relative speed, and the potential collision trajectory. The control unit of the autonomous braking system typically also interfaces with the service brake unit(s) 63 of the braking system 60 to apply the brakes autonomously if necessary.

The service brake unit 63 typically includes a brake actuation system including the components that physically apply the brakes when a signal is received from the control unit. Such system typically works with the hydraulic braking system of the vehicle but can also be part of an electro-mechanical brake-by-wire system in some vehicles.

In one example, the processing circuitry 102 is configured to determine that the braking situation amounts to a panic braking situation. A panic braking situation can be determined by the processing circuitry 102 in several different manners. Typically, the panic braking situation is determined to be different to an ordinary braking situation.

In the following, a number of options for determining the panic braking situation will be described. By way of example, the processing circuit 102 is configured to determine that the braking situation amounts to a panic braking situation by determining changes in the position of the brake pedal.

In another example, the processing circuit 102 is configured to determine that the braking situation amounts to a panic braking situation from data in the received braking request.

In yet another example, the processing circuit 102 is configured to determine that the braking situation amounts to a panic braking situation by a combination of determining changes in the position of the brake pedal 62 and from the data in the received braking request.

Moreover, in one example, the processing circuitry 102 is configured to determine that a panic braking situation is different to an ordinary braking situation by determining a speed in a brake pedal positional change. The speed in the brake pedal position change can be determined e.g. from measuring the time for a positional change from a first position to a second position of the brake pedal. For example, the processing circuitry 102 determines the speed of the brake pedal positional change by measuring the time it takes for the brake pedal 62 to move from the first position to the second position. Such measurement can be performed by the use of one or more position sensors, such as a Hall Effect sensor or an optical encoder, which are commonly integrated into the brake pedal mechanism. The position sensor continuously monitors the brake pedal's position and provides real-time data to the processing circuitry 102. The processing circuitry 102 samples the sensor's output at high frequency, ensuring that even rapid changes in the brake pedal's position are accurately captured. When the brake pedal 62 is in a first position, such as its initial resting state, the sensor detects and records this position. As the driver presses the brake pedal, moving it to a second position (whether partially engaged or fully engaged) the sensor detects this new position. The processing circuitry 102 then records the time interval for the brake pedal 62 to move from the first position to the second position. A shorter time interval between the first and second positions indicates a faster positional change, which may signify a panic braking situation. Conversely, a longer time interval would indicate a slower positional change, typically associated with normal braking.

The processing circuitry 102 uses the information to assess the urgency of the braking situation. If the speed of the positional change exceeds a certain threshold, the processing circuitry 102 may identify this as a panic braking situation, prompting the processing circuitry 102 to switch from the first clutch actuating engine restarting mode CM1 to the second clutch actuating engine restarting mode CM2, and restart the engine 12 by controlling the clutch 14 according to the second clutch actuating engine restarting mode CM2.

As such, by continuously monitoring and analyzing the speed of the brake pedal 62 positional change, the processing circuitry 102 enables that the vehicle 10 can respond appropriately to varying braking scenarios, enhancing both safety and performance.

In a similar manner, in the freewheeling mode ES-FM, the autonomous braking system can interface with the processing circuitry 102 to ensure that the brakes are applied in an appropriate manner. If the autonomous braking system detects a need for emergency braking, it can send a braking request to the processing circuitry 102, which will then initiate the engine restart process to re-engage power steering and full braking capability by switching from the first clutch actuating engine restarting mode CM1 to the second clutch actuating engine restarting mode CM2, and restarting the engine 12 by controlling the clutch 14 according to the second clutch actuating engine restarting mode CM2.

As mentioned above, the processing circuitry 102 is configured to determine to switch from the first clutch actuating engine restarting mode CM1 to the second clutch actuating engine restarting mode CM2 responsive to the identified braking situation.

The first clutch actuating engine restarting mode CM1 is here a comfort clutch engagement mode and the second clutch actuating engine restarting mode CM2 is a rapid clutch engagement mode. The first clutch actuating engine restarting mode CM1 is configured to provide a smooth and gradual clutch engagement, focusing on improving driver and passenger comfort during the engine restart. The second clutch actuating engine restarting mode CM2 is instead configured to engage the clutch 14 as quickly as possible, prioritizing a rapid engine restart to ensure the vehicle 10 quickly regains full power and control, especially in emergency situations. As such, the second clutch actuating engine restarting mode CM2 typically sacrifices some degree of comfort in favor of achieving the fastest possible engine restart.

Typically, the second clutch actuating engine restarting mode CM2 comprises engaging the clutch 14 so that torque from the driving wheels 21 to the engine 12 is transferred quicker therebetween than in the first clutch actuating engine restarting mode CM1. In this context, the term "quicker" typically refers to the clutch engagement process intended for providing a more rapid engine restart, including a faster transition to torque transfer. For example, in the second clutch actuating engine restarting mode CM2, the powertrain system 11 is designed to reach the point more rapidly at which torque begins to be transferred from the drive wheels 21 to the engine 12. Such operation typically involves quickly bringing the clutch plates into contact or close proximity, so that the initial engagement happens sooner compared to the first clutch actuating engine restarting mode CM1. The initial engagement begins the process of accelerating the engine's crankshaft, which is necessary to restart the engine 12. The term "quicker" may also refer to a faster achievement of effective torque transfer. This means that the clutch 14 is engaged more aggressively or efficiently to reach a level of torque transfer that is high enough to safeguard the engine restart.

In one example, the second clutch actuating engine restarting mode CM2 comprises engaging the clutch 14 so that torque from the drive wheels 21 to the engine 12 is transferred quicker therebetween than in the first clutch actuating engine restarting mode CM1 through a quicker response time in the second clutch actuating engine restarting mode CM2 than in the first clutch actuating engine restarting mode CM1.

In one example, the second clutch actuating engine restarting mode CM2 comprises engaging the clutch 14 with a deliberate overshoot in the torque being applied. The system may not just engage the clutch 14 to the minimum level needed for the engine to start, but pushes the clutch 12 slightly beyond such level to ensure that the engine starts reliably and quickly. In this context, it should be noted that it is the torque applied to the engine 12 from the driving wheels 21 that causes the crankshaft to accelerate. The quicker the system can achieve a high level of torque transfer, the faster the engine 12 will reach the necessary rotational speed (as measured in RPM) to start.

In one example, a clutch engagement time for the second clutch actuating engine restarting mode CM2 is shorter than a clutch engagement time for the first clutch actuating engine restarting mode CM1.

In one example, a torque transfer time from the driving wheels 21 to the engine 12 in the second clutch actuating engine restarting mode CM2 is at least 25 % faster than a torque transfer time from the driving wheels 21 to the engine 12 in the first clutch actuating engine restarting mode CM1. In this manner, the speed of torque transfer in the second clutch actuating engine restarting mode CM2 is substantially faster compared to the first clutch actuating engine restarting mode CM1. The term "torque transfer time" typically refers to the duration it takes for the clutch 12 to engage sufficiently to begin transferring torque from the driving wheels 21 to the engine 12. The term "at least 25 % faster" typically means that in the second clutch actuating engine restarting mode, the torque transfer occurs in one fourth of the time, or less, as compared to the torque transfer time of the first mode. For example, if the torque transfer time in the first mode is 1 second, then in the second mode, it would be 0,25 second, or less.

As mentioned above, the processing circuitry 102 is here also configured to control the powertrain system 11 into the freewheeling mode ES-FM, e.g. by changing a rotating state of the output shaft 13 to a non-rotating state, and disconnecting the engine 12 from the drive wheels 21.

Upon determining that the freewheeling mode ES-FM can contribute to fuel savings in situations where the engine restart is performed by the controllable clutch 14, as described above, the processing circuitry 102 typically also considers topography data and various vehicle data when initiating the activation of the freewheeling mode ES-FM. As such, the processing circuitry 102 is configured to initiate activation of the freewheeling mode ES-FM based on topography data and vehicle data.

For example, the processing circuitry 102 is configured to control the powertrain system 11 and the vehicle 10 from topography data by analyzing and extracting relevant information about the route, including distance, elevation changes, road conditions, and other factors that can affect the vehicle's performance and fuel consumption. The processing circuitry 102 is configured to obtain topography data from various sources, such as digital maps, GPS data, or geographic information system (GIS) databases. These sources may generally include relevant information about the road network, including roads, highways, elevation data, and potential destinations. In one example, the topography data is received by the processing circuitry 102 from a route planner system in the vehicle. The topography data may likewise be acquired by a so-called look ahead device, which is typically an integral part of an ordinary cruise control system. The look ahead device may in addition, or alternatively, be an integral part of the computer system 100.

The processing circuitry 102 is typically configured to determine a starting point in time for the freewheeling mode ES-FM based on topography data and vehicle data.

The automatically controlled engine start system 54 is typically configured to automatically control the engine 12 of the powertrain system 11 of vehicle 10, such as the above modes, including shutdown of the engine 12 and engine restarts while the vehicle 10 is moving along the route.

The automatically controlled engine start system 54 is configured to control the powertrain system 11 from vehicle data that can be gathered from various vehicle sensors, from a navigation system of the vehicle 10, from data received from one or more control units of the vehicle 10, and/or from various technologies and systems for tracking and monitoring the vehicle 10. Thus, the processing circuitry 102 is configured to receive data and store data in the memory 104 of the computer system 100.

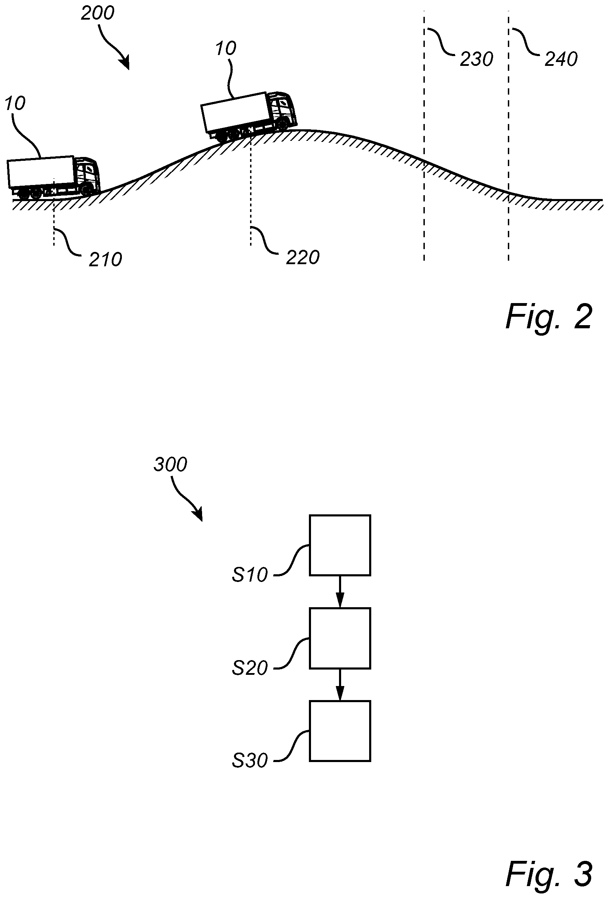

FIG. 2 illustrates an example of controlling a powertrain system of a vehicle, such as the powertrain system 11 of the vehicle 10 of FIG. 1, along a road defining an intended route 200 for the vehicle 10. More specifically, FIG. 2 schematically illustrates an example of a heavy-duty vehicle in the form of a loaded truck 10 driving uphill, over a crest and downhill, in which the computer system 100 is used to control the powertrain system 11 according to the operations and methods, as described herein. Moreover, while the vehicle 10 is in motion along the road 200, the processing circuitry 102 typically continuously simulates and predict the speed behavior of the vehicle 10 so as to identify an opportunity for the freewheeling mode ES-FM. As such, the processing circuitry 102 determines whether the vehicle 10 can be freewheeling in the freewheeling mode ES-FM along the road without falling below a minimum allowable speed.

For ease of reference, an extension of the intended route 200 is here indicated by a number of locations 210, 220, 230 and 240 along the road. The road segment between location 210 and location 220 is indicative of an uphill road segment, location 220 is indicative of a crest segment, or slightly after the crest, and the road segment between location 220, location 230 and location 240 is indicative of a downhill segment. It should be noted that the crest is the highest point of a hill or slope in a road.

Along the route 200, the processing circuitry 102 acquires data from the predictive cruise control system 55 to determine and set a target speed for the vehicle 10. The processing circuitry 102 may also take input from the driver into account for setting the target speed. In this manner, the processing circuitry 102 determines the vehicle target speed for the vehicle 10. In this example, the processing circuitry 102 determines the vehicle target speed for the vehicle 10 as it travels uphill at location 210. The processing circuitry 102 may likewise determine, or estimate, the vehicle target speed for the vehicle 10 as it approaches the crest at 220 and the downhill segment at 230.

Typically, at location 210, the processing circuitry 102 predicts whether there is an opportunity to activate the freewheeling mode ES-FM for an upcoming road segment along the route 200. In this example, the processing circuitry 102 predicts the opportunity for activating the freewheeling mode ES-FM based on a possibility of restarting the engine 12 along an intended route 200 using the clutch 14. In addition, or alternatively, the processing circuitry 102 typically predicts and identifies a potential up-coming freewheeling mode period. The processing circuitry 102 identifies the potential up-coming freewheeling mode period using topography data over the route 200. In this example, the potential up-coming freewheeling mode period is identified to extend between location 220 and location 240, as depicted in FIG. 2. Merely as an example, the processing circuitry 102 predicts the length of the freewheeling mode period based on a possible fuel saving or any other suitable measure for determining that it is feasible to set the engine 12 in the freewheeling mode ES-FM. Based on the above predictions using topography data and vehicle data, the processing circuitry 102 determines that there is a possibility of saving fuel if the engine 12 is shut down at location 220. The processing circuitry 102 also determines that the engine 12 should be shut down until location 240 to ensure sufficient fuel savings compared to e.g. a reference value, which is stored in the memory of the computer system 100. Finally, when the vehicle 10 is at location 220, the processing circuitry 102 controls the powertrain system 11 into the freewheeling mode ES-FM. It should also be noted that the computer system 100 may typically determine to set the freewheeling mode ES-FM responsive to other parameters and at other locations, e.g. before location 220. As such, the processing circuitry 102 determines whether the powertrain system 11 should enter, or be operated, in either the freewheeling mode ES-FM or the freewheeling mode ED-FM continuously along the route, e.g. on the crest, over the crest, or just after the crest. In this example, the operation of determining whether the powertrain system 11 should enter, or be operated, in one of the freewheeling modes along the route is performed in a predictive manner.

The decision to enter one of the freewheeling modes, such as the freewheeling mode ES-FM, is typically based on an analysis of topography data (e.g. road gradient) and vehicle data (such as mass of the vehicle). Typically, the processing circuitry 102 is configured to continuously simulate the speed behavior of the vehicle 10 to determine whether a freewheeling mode condition is fulfilled, such as a vehicle speed condition, fuel saving condition etc. For example, the processing circuitry 102 determines whether the vehicle 10 can be freewheeling along the road without falling below a minimum allowable speed. The processing circuitry 102 thus determines that vehicle 10 is capable of entering the engine stop freewheeling mode ES-FM without the speed dropping below a predetermined lower limit, which is deemed acceptable or safe for the road conditions ahead, including any remaining uphill segments, crests, and downhill segments. It should also be noted that the processing circuitry 102 may incorporate additional data into the determination process, such as aerodynamics data and road surface friction. Optionally, the processing circuitry 102 determines a freewheeling mode condition for the powertrain system 11 of the vehicle 10 either before reaching the crest or, in some instances, upon reaching the crest itself. In some examples, the processing circuitry 102 determines the suitability of entering the freewheeling mode ES-FM based on acquired vehicle data, such as the mass of vehicle 10, in combination with topography data, such as road gradient or inclination. The acquired vehicle data and topography data are decisive for determining whether the powertrain system 11 should be set into the engine stop freewheeling mode ES-FM. For example, the decision is made through a comparison with one or more threshold levels and/or by comparing against previous vehicle data stored in memory as a look-up table. Moreover, when the powertrain system 11 is operating in the engine stop freewheeling mode ES-FM, the processing circuitry 102 typically determines to maintain the engine stop freewheeling mode ES-FM until reaching the vehicle target speed, or until another identified driving situation requiring the engine to restart. One example of such driving situation can be a braking situation.

Such braking situation is illustrated in FIG. 2 at location 230. More specifically, as illustrated in FIG. 2, the heavy-duty truck 10 is driving along the route 200, descending the gentle slope before location 230 in the engine stop freewheeling mode ES-FM. In the engine stop freewheeling mode ES-FM, the engine 12 is shutdown, i.e. the output shaft 16 is non-rotating, and the engine 12 is disconnected from the driving wheels). During the engine stop freewheeling mode ES-FM, any engine-driven power steering pump may also typically be inactive. To maintain power steering, an extra pump driven by the output shaft of the transmission (connected to the driving wheels) can be utilized. However, at low vehicle speeds, the power output from such extra pump can be insufficient, leading to poor power steering performance. Therefore, in some driving situations, such as at a braking situation, it may be useful to quickly restart the engine 12 by using the clutch 14 to restore engine power, which in turn reactivates the engine-driven power steering pump, ensuring reliable power steering and thus better vehicle control. While an alternative method for restarting the engine 12 is to use the starter motor such approach carries the risk of causing a vehicle blackout, particularly in a single-battery truck, due to the high current draw required by the starter motor, which can lead to a significant voltage drop. Restarting the engine 12 via the clutch 14 avoids this risk, as it does not rely on the electrical system to the same extent, thereby ensuring that the vehicle 10 remains operational without the danger of electrical failure.

Hence, in this example, the processing circuitry 102 identifies a braking situation during the engine stop freewheeling mode ES-FM, as described above in relation to FIG. 1. In FIG. 2, this is reflected by the location 230 for ease of reference.

As such, while the vehicle 10 is in the engine stop freewheeling mode ES-FM, the processing circuitry 102 is here configured to identify the braking situation for the vehicle 10. In this example, the identification is determined by detecting that the brake pedal 62 is positioned in an engaged state during the engine stop freewheeling mode ES-FM. In addition, or alternatively, the processing circuitry 102 may identify the braking situation by receiving a braking request from the autonomous braking system.

Moreover, as mentioned above, the processing circuitry 102 is here configured to select between two distinct engine restarting modes. The first clutch actuating engine restarting mode CM1 (comfort clutch engagement mode) prioritizes a smooth and comfortable restart, suitable for normal driving conditions. The second mode CM2 (rapid clutch engagement mode) is designed for emergency situations where engine restart speed may be more important. In the second clutch actuating engine restarting mode CM2, the engine restart is slightly less comfortable but faster, ensuring that the engine 12 is restarted more promptly after the identified braking situation. Such dual-mode control strategy allows the vehicle 10 to adapt its response based on the urgency of the situation, balancing comfort and safety.

Accordingly, subsequent to recognizing the braking situation at location 230, the processing circuitry 102 determines to switch from the first clutch actuating engine restarting mode CM1 to the second clutch actuating engine restarting mode CM2. In the second clutch actuating engine restarting mode CM2, the clutch 14 engages so that torque from the driving wheels 21 to the engine 12 is transferred more quickly than in the first clutch actuating engine restarting mode CM1.

To this end, the processing circuitry 102 determines to control the powertrain system 11 to restart the engine 12 using the clutch 14 as described herein. Moreover, in this example, the engine 12 is restarted according to the second clutch actuating engine restarting mode CM2. Accordingly, the engine 12 is restarted at location 230 rather than at location 240 due to the identified braking situation.

Subsequent to a successful engine restart at location 230, the vehicle 10 may further be controlled to brake in an ordinary manner using the brake system 60. Alternatively, the powertrain system 11 will be set in an operational mode in the form of the coasting mode, in a conventional propulsion mode or in the engine braking mode EBM depending on the current and upcoming driving situations.

In some situations where the vehicle 10 encounters a panic brake, particularly on slippery roads, it may be important that the engine 12 is restarted as quickly as possible. The second clutch actuating engine restarting mode CM2 focuses on achieving the fastest possible engine restart. Such rapid engagement helps prevent situations where the driving wheels 21 slow down faster than the engine 12 can be restarted, which could otherwise lead to poor power steering, loss of vehicle control, and a negative driver experience. More specifically, poor power steering, loss of vehicle control, and a negative driver experience occur because the engine is unable to restart using the clutch 14.

As such, in an extended example of the computer system 100, and upon identifying the braking situation, the processing circuitry 102 is also configured to determine whether the braking situation amounts to a panic braking situation. A panic braking situation is e.g. determined by assessing changes in the position of the brake pedal 62 at location 230. As mentioned above, the processing circuitry 102 may also, or alternatively, analyze data in the braking request to make the determination. As such, the processing circuitry 102 is able to differentiate a panic braking situation from an ordinary braking situation.

In FIG. 2, the processing circuitry 102 determines that the braking situation at location 230 is a panic braking situation, and not an ordinary braking situation, by evaluating the speed at which the brake pedal positional change occurs. In other words, the sudden and rapid depression of the brake pedal 62 confirms that the situation is a panic braking event.

Recognizing the urgency of the situation at location 230, the processing circuitry 102 switches from the first clutch actuating engine restarting mode CM1 to the second clutch actuating engine restarting mode CM2. Again, in the second mode CM2, the clutch 14 engages so that torque from the driving wheels 21 to the engine 12 is transferred more quickly than in the first clutch actuating engine restarting mode CM1.

For example, the processing circuitry 102 controls the clutch engagement time, ensuring that it is shorter in the second clutch actuating engine restarting mode CM2 compared to the first mode CM1. The shortened engagement time allows the engine 12 to quickly restart, so that the powertrain system 11 restores engine power.

By way of example, the torque transfer time from the driving wheels 21 to the engine 12 in the second clutch actuating engine restarting mode CM2 is at least 25% faster than in the first clutch actuating engine restarting mode CM1. Such rapid transfer of torque allows the engine to restart swiftly, providing immediate assistance with power steering and vehicle control.

To this end, the processing circuitry 102 controls the engine restart by engaging the clutch 14 according to the second clutch actuating engine restarting mode CM2, and thus also reconnecting the engine 12 with the drivetrain. Such action restores engine power, allowing the vehicle 10 to regain full functionality, including power steering and braking assistance, thereby improving overall vehicle safety during the panic braking event.

Subsequent to a successful engine restart at location 230, the vehicle 10 may further be controlled to brake in an ordinary manner using the brake system 60, or the powertrain system 11 will be set in an operational mode in the form of the coasting mode, in a conventional propulsion mode or in the engine braking mode EBM depending on the current and upcoming driving situations.

It should be noted that, along the route 200, the processing circuitry 102 can selectively operate the powertrain system 11 in a number of operational modes, comprising the engine disconnected freewheeling mode ED-FM, the engine stop freewheeling mode ES-FM, the coasting mode CM, and the engine braking mode EBM. In the context of the present disclosure, "engine disconnected freewheeling mode" refers to an operational mode in which an output shaft of the engine 12 is rotating, the engine 12 is disconnected from the one or more drive wheels, and fuel is being supplied to the engine 12. An operational mode where the output shaft of the engine 12 is rotating indicates that the engine 12 is in an active state, such as in an operating mode, engine-on mode, power generation mode, or idling mode. In the engine disconnected freewheeling mode ED-FM, the engine 12 is active and running, but not engaged with the drivetrain for propulsion.

Besides, the engine disconnected freewheeling mode ED-FM has a positive impact on fuel consumption, operating the powertrain system 11 in the engine disconnected freewheeling mode ED-FM may be advantageous in operating situations where battery recharging may be needed. The engine disconnected freewheeling mode ED-FM allows the engine 12 to run, thereby actively charging the battery, as e.g. opposed to the engine stop freewheeling mode ES-FM. In the latter, the engine is inactive (non-operating) and therefore unable to charge the battery, presenting a risk of inadequate battery power to restart the engine using the starter motor. Additionally, the engine disconnected freewheeling mode ED-FM may be beneficial in situations where the operating temperature of the engine exceeds normal thresholds, necessitating the activation of the engine cooling system for active thermal management.

Moreover, in the context of the present disclosure, the "coasting mode" (CM) refers to an operational mode in which the output shaft of the engine is rotating, the engine is connected to the one or more drive wheels, and fuel supply to the engine being interrupted. In coasting mode, the vehicle moves by its own momentum with minimal engine resistance. Operating a vehicle in the coasting mode may also contribute to lowering the fuel consumption in comparison to a conventional propulsion mode, as fuel supply is interrupted in the coasting mode.

Further, in the context of the present disclosure, the "engine braking mode" (EBM) refers to an operational mode in which the output shaft of the engine is rotating, the engine is connected to the one or more drive wheels, and the engine is further operated so as to generate a braking effect. Operating the engine so as to generate a braking effect means that the engine is actively controlled to increase the internal resistance within the engine, thereby slowing down the vehicle. Engine braking increases engine load to create braking force, for example, by releasing compressed air from the cylinders just before the compression stroke completes (compression release) or creating back pressure in the exhaust system (exhaust brake) to slow down the vehicle. Engine braking may be particularly useful in heavy-duty vehicles for maintaining control and reducing speed on long downhill gradients without overheating the service brake units 63.

In the above modes, the fuel is supplied to the engine 12 by the fuel injector 78, as described herein. The control of fuel to the engine 12 is also controlled by controlling the fuel injector 78, as described herein.

The transitions between the various operational modes of the powertrain system 11, including the freewheeling modes, can be performed in an automatic manner by the computer system 100, including e.g. an automatically controlled engine start system. The automatically controlled engine start system is typically an integral part of a so-called automatic and predictive engine stop-and-start system for vehicles. Automatic and predictive engine stop-and-start systems are configured to automatically control one or more vehicle and powertrains operations, such as shutting-down and restarting the engine, using predictive data and real-time information.

As mentioned herein, the computer system 100 may be an integral part of the powertrain system 11, wherein the powertrain system 11 comprises at least the engine 12, the controllable clutch 14, the transmission 17 arranged to be coupled to the engine 12 by means of the controllable clutch 14, and wherein the transmission 17 further comprises the output shaft 18 configured to be coupled to the drive axle 24 of a set of wheels 21.

FIG. 3 is a flow chart of a method according to an example. More specifically, FIG. 3 is an exemplary computer implemented method 300 according to an example. The computer-implemented method 300 of FIG. 3 is also intended for controlling the powertrain system 11 of the heavy-duty vehicle 10 in FIG. 1. The method 300 is typically implemented by the processing circuitry 102. As mentioned above in relation to FIGS. 1 and 2, the powertrain system 11 is selectively operable in a number of operational modes, comprising at least the engine stop freewheeling mode ES-FM.

As illustrated in FIG. 3, the computer-implemented method 300 comprises a step S10 of identifying, in the freewheeling mode ES-FM, and by processing circuitry 102 of the computer system 100, a braking situation for the vehicle 10.

Moreover, responsive to the identified braking situation, the method 300 comprises a step S20 of determining, by processing circuitry 102 of the computer system 100, to switch from a first clutch actuating engine restarting mode CM1 to a second clutch actuating engine restarting mode CM2.

Subsequently, the method 300 comprises a step S30 of restarting, by processing circuitry 102 of the computer system 100, the engine 12 by controlling the clutch 14 according to the second clutch actuating engine restarting mode CM2.

It should be noted that the computer system 100 may be an integral part of the powertrain system 11. In other examples, the computer system 100 and the powertrain system 11 may be separate parts configured to communicate with each other. The computer system 100 may also be a part of a remote server or the like. Hence, in some examples, there is provided a system comprising the powertrain system 11 and the computer system 100, wherein the computer system 100 is configured to be in communication with the powertrain system 11 so as to control the powertrain system 11 of the vehicle 10.

In some examples, there is provided a computer program product comprising program code for performing, when executed by the processing circuitry 102, the method 300 as described above.

In some examples, there is provided a non-transitory computer-readable storage medium comprising instructions, which when executed by the processing circuitry 102, cause the processing circuitry 102 to perform the method 300 as described above.

Further details of one example of a computer system that can be used as the computer system 100 will now be described in relation to FIG. 4.

FIG. 4 is a schematic diagram of a computer system 400 for implementing examples disclosed herein. The computer system 400 is adapted to execute instructions from a computer-readable medium to perform these and/or any of the functions or processing described herein. The computer system 400 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 400 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 400 may comprise at least one computing device or electronic device capable of including firmware, hardware, and/or executing software instructions to implement the functionality described herein. The computer system 400 may include processing circuitry 402 (e.g., processing circuitry including one or more processor devices or control units), a memory 404, and a system bus 406. The computer system 400 may include at least one computing device having the processing circuitry 402. The system bus 406 provides an interface for system components including, but not limited to, the memory 404 and the processing circuitry 402. The processing circuitry 402 may include any number of hardware components for conducting data or signal processing or for executing computer code stored in memory 404. The processing circuitry 402 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 402 may further include computer executable code that controls operation of the programmable device.

The system bus 406 may be any of several types of bus structures that may further interconnect to a memory bus (with or without a memory controller), a peripheral bus, and/or a local bus using any of a variety of bus architectures. The memory 404 may be one or more devices for storing data and/or computer code for completing or facilitating methods described herein. The memory 404 may include database components, object code components, script components, or other types of information structure for supporting the various activities herein. Any distributed or local memory device may be utilized with the systems and methods of this description. The memory 404 may be communicably connected to the processing circuitry 402 (e.g., via a circuit or any other wired, wireless, or network connection) and may include computer code for executing one or more processes described herein. The memory 404 may include non-volatile memory 408 (e.g., read-only memory (ROM), erasable programmable read-only memory (EPROM), electrically erasable programmable read-only memory (EEPROM), etc.), and volatile memory 410 (e.g., random-access memory (RAM)), or any other medium which can be used to carry or store desired program code in the form of machine-executable instructions or data structures and which can be accessed by a computer or other machine with processing circuitry 402. A basic input/output system (BIOS) 412 may be stored in the non-volatile memory 408 and can include the basic routines that help to transfer information between elements within the computer system 400.

The computer system 400 may further include or be coupled to a non-transitory computer-readable storage medium such as the storage device 414, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 414 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 414 and/or in the volatile memory 410, which may include an operating system 416 and/or one or more program modules 418. All or a portion of the examples disclosed herein may be implemented as a computer program 420 stored on a transitory or non-transitory computer-usable or computer-readable storage medium (e.g., single medium or multiple media), such as the storage device 414, which includes complex programming instructions (e.g., complex computer-readable program code) to cause the processing circuitry 402 to carry out actions described herein. Thus, the computer-readable program code of the computer program 420 can comprise software instructions for implementing the functionality of the examples described herein when executed by the processing circuitry 402. In some examples, the storage device 414 may be a computer program product (e.g., readable storage medium) storing the computer program 420 thereon, where at least a portion of a computer program 420 may be loadable (e.g., into a processor) for implementing the functionality of the examples described herein when executed by the processing circuitry 402. The processing circuitry 402 may serve as a controller or control system for the computer system 400 that is to implement the functionality described herein.

The computer system 400 may include an input device interface 422 configured to receive input and selections to be communicated to the computer system 400 when executing instructions, such as from a keyboard, mouse, touch-sensitive surface, etc. Such input devices may be connected to the processing circuitry 402 through the input device interface 422 coupled to the system bus 406 but can be connected through other interfaces, such as a parallel port, an Institute of Electrical and Electronic Engineers (IEEE) 1394 serial port, a Universal Serial Bus (USB) port, an IR interface, and the like. The computer system 400 may include an output device interface 424 configured to forward output, such as to a display, a video display unit (e.g., a liquid crystal display (LCD) or a cathode ray tube (CRT)). The computer system 400 may include a communications interface 426 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Moreover, the present disclosure may be exemplified by any one of the below examples.

Example 1. A computer system 100 for controlling a powertrain system 11 of a vehicle 10, the powertrain system comprising an internal combustion engine 12 connectable to one or more drive wheels 21, the computer system comprising processing circuitry 102 configured to selectively operate the powertrain system in a number of operational modes comprising at least a freewheeling mode ES-FM, in which an output shaft of the engine is non-rotating and the engine is disconnected from the one or more drive wheels, wherein the processing circuitry is further configured to: identify, in the freewheeling mode, a braking situation for the vehicle; responsive to the identified braking situation, determine to switch from a first clutch actuating engine restarting mode to a second clutch actuating engine restarting mode; and restart the engine by controlling a clutch according to the second clutch actuating engine restarting mode.

Example 2. The computer system of example 1, wherein the processing circuitry is configured to identify the braking situation for the vehicle by determining that a brake pedal is positioned in an engaged state during the freewheeling mode, and/or wherein the processing circuitry is configured to identify the braking situation for the vehicle by receiving a braking request from an autonomous braking system during the freewheeling mode.

Example 3. The computer system of example 2, wherein the processing circuitry is configured to determine that the braking situation amounts to a panic braking situation.

Example 4. The computer system of example 3, wherein the processing circuitry is configured to determine that the braking situation amounts to a panic braking situation by determining changes in the position of the brake pedal, and/or wherein the processing circuitry is configured to determine that the braking situation amounts to a panic braking situation from data in the braking request.

Example 5. The computer system of example 3 or example 4, wherein the processing circuitry is configured to determine that a panic braking situation is different to an ordinary braking situation by determining a speed in a brake pedal positional change.

Example 6. The computer system of any previous examples, wherein the second clutch actuating engine restarting mode comprises engaging the clutch so that torque from the drive wheels to the engine is transferred quicker therebetween than in the first clutch actuating engine restarting mode.

Example 7. The computer system of example 6, wherein the second clutch actuating engine restarting mode comprises engaging the clutch so that torque from the drive wheels to the engine is transferred quicker therebetween than in the first clutch actuating engine restarting mode through a quicker response time in the second clutch actuating engine restarting mode than in the first clutch actuating engine restarting mode.

Example 8. The computer system of example 6 or example 7, wherein a clutch engagement time for the second clutch actuating engine restarting mode is shorter than a clutch engagement time for the first clutch actuating engine restarting mode.

Example 9. The computer system of any previous examples 6 to example 8, wherein a torque transfer time from the drive wheels to the engine in the second clutch actuating engine restarting mode is at least 25 % faster than a torque transfer time from the drive wheels to the engine in the first clutch actuating engine restarting mode.

Example 10. The computer system of any previous examples, wherein restart the engine by controlling the clutch according to the second clutch actuating engine restarting mode is performed by engaging the clutch to a torque transfer position.

Example 11. A powertrain system 11 comprising a computer system 100 according to any one of examples 1 to 10, an internal combustion engine 12, a controllable clutch 14, a transmission 17 arranged to be coupled to the internal combustion engine by means of the controllable clutch, and wherein the transmission further comprises an output shaft 18 configured to be coupled to a driven axle 24 of a set of wheels 21.

Example 12. A vehicle 1 comprising a computer system of any of the examples 1 to 10 and/or a powertrain system according to example 11.

Example 13. A computer-implemented method 300 for controlling a powertrain system 11 of a vehicle 10, the powertrain system comprising an internal combustion engine 12 connectable to one or more drive wheels 21, the powertrain system being operable in a number of operational modes, including at least a freewheeling mode ES-FM, in which an output shaft of the engine is non-rotating, and the engine is disconnected from the one or more drive wheels, wherein the method comprises identifying, in the freewheeling mode, and by processing circuitry of a computer system, a braking situation for the vehicle; responsive to the identified braking situation, determining, by processing circuitry of a computer system, to switch from a first clutch actuating engine restarting mode to a second clutch actuating engine restarting mode; and restarting, by processing circuitry of the computer system, the engine by controlling a clutch according to the second clutch actuating engine restarting mode.

Example 14. A computer program product comprising program code for performing, when executed by the processing circuitry, the method of example 13.

Example 15. A non-transitory computer-readable storage medium comprising instructions, which when executed by the processing circuitry, cause the processing circuitry to perform the method of example 13.

Example 16: The computer system of any previous examples, wherein the processing circuitry is configured to reactivate braking of the one or more drive wheels subsequent to the engine restart.

Example 17: The computer system of any previous examples, braking of the one or more drive wheels is performed by the processing circuitry controlling the braking system.

Example 18. The powertrain system 11 of any previous examples, wherein the controllable clutch is an electronically controlled multi-plate clutch.

Example 19. The powertrain system 11 of any previous examples, wherein the transmission is an automatic transmission configured to automatically select gear ratios based on vehicle speed and load.

The term "operatively connected", as used herein, typically means that a first component is in operative relation to another second component. By way of example, the term operatively connected means that the first component is connectable, or connected, to the second component in a manner allowing a transfer of a rotational movement and/or rotational torque from the first component to the second component. Therefore, the term encompasses a functional construction in which two components are connected such that the rotational speed of the first component corresponds to the rotational speed of the second component. However, the term also encompasses a functional construction in which there is a ratio between the rotational movement of the first component and the rotational movement of the second component, i.e., the rotational speed of the second component is proportional to the rotational speed of the first component.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (100) for controlling a powertrain system (11) of a vehicle (10), the powertrain system comprising an internal combustion engine (12) connectable to one or more drive wheels (21), the computer system comprising processing circuitry (102) configured to selectively operate the powertrain system in a number of operational modes comprising at least a freewheeling mode (ES-FM), in which an output shaft of the engine is non-rotating and the engine is disconnected from the one or more drive wheels,
wherein the processing circuitry is further configured to:
- identify, in the freewheeling mode, a braking situation for the vehicle;
- responsive to the identified braking situation, determine to switch from a first clutch actuating engine restarting mode to a second clutch actuating engine restarting mode; and
- restart the engine by controlling a clutch according to the second clutch actuating engine restarting mode.

2. The computer system of claim 1, wherein the processing circuitry is configured to identify the braking situation for the vehicle by determining that a brake pedal is positioned in an engaged state during the freewheeling mode, and/or wherein the processing circuitry is configured to identify the braking situation for the vehicle by receiving a braking request from an autonomous braking system during the freewheeling mode.

3. The computer system of claim 2, wherein the processing circuitry is configured to determine that the braking situation amounts to a panic braking situation.

4. The computer system of claim 3, wherein the processing circuitry is configured to determine that the braking situation amounts to a panic braking situation by determining changes in the position of the brake pedal, and/or wherein the processing circuitry is configured to determine that the braking situation amounts to a panic braking situation from data in the braking request.

5. The computer system of claim 3 or claim 4, wherein the processing circuitry is configured to determine that a panic braking situation is different to an ordinary braking situation by determining a speed in a brake pedal positional change.

6. The computer system of any of the previous claims, wherein the second clutch actuating engine restarting mode comprises engaging the clutch so that torque from the drive wheels to the engine is transferred quicker therebetween than in the first clutch actuating engine restarting mode.

7. The computer system of claim 6, wherein the second clutch actuating engine restarting mode comprises engaging the clutch so that torque from the drive wheels to the engine is transferred quicker therebetween than in the first clutch actuating engine restarting mode through a quicker response time in the second clutch actuating engine restarting mode than in the first clutch actuating engine restarting mode.

8. The computer system of claim 6 or claim 7, wherein a clutch engagement time for the second clutch actuating engine restarting mode is shorter than a clutch engagement time for the first clutch actuating engine restarting mode.

9. The computer system of any of claims 6 to claim 8, wherein a torque transfer time from the drive wheels to the engine in the second clutch actuating engine restarting mode is at least 25 % faster than a torque transfer time from the drive wheels to the engine in the first clutch actuating engine restarting mode.

10. The computer system of any of the previous claims, wherein restarting the engine by controlling the clutch according to the second clutch actuating engine restarting mode is performed by engaging the clutch to a torque transfer position.

11. A powertrain system (11) comprising a computer system (100) according to any one of claims 1 to 10, an internal combustion engine (12), a controllable clutch (14), a transmission (17) arranged to be coupled to the internal combustion engine by means of the controllable clutch, and wherein the transmission further comprises an output shaft (18) configured to be coupled to a driven axle (24) of a set of wheels (21).

12. A vehicle (1) comprising a computer system of any of the claims 1 to 10 and/or a powertrain system according to claim 11.

13. A computer-implemented method (300) for controlling a powertrain system (11) of a vehicle (10), the powertrain system comprising an internal combustion engine (12) connectable to one or more drive wheels (21), the powertrain system being operable in a number of operational modes, including at least a freewheeling mode (ES-FM), in which an output shaft of the engine is non-rotating, and the engine is disconnected from the one or more drive wheels, wherein the method comprises identifying, in the freewheeling mode, and by processing circuitry of a computer system, a braking situation for the vehicle; responsive to the identified braking situation, determining, by processing circuitry of a computer system, to switch from a first clutch actuating engine restarting mode to a second clutch actuating engine restarting mode; and restarting, by processing circuitry of the computer system, the engine by controlling a clutch according to the second clutch actuating engine restarting mode.

14. A computer program product comprising program code for performing, when executed by the processing circuitry, the method of claim 13.

15. A non-transitory computer-readable storage medium comprising instructions, which when executed by the processing circuitry, cause the processing circuitry to perform the method of claim 13.
